# EUROPEAN PATENT SPECIFICATION

(11) **EP 4 083 760 B1**
(45) Date of publication and mention of the grant of the patent: **02.10.2024**
(21) Application number: 21171068.6
(22) Date of filing: 28.04.2021
(51) Int. Cl.: G06F 3/0354

(54) **A SIMPLIFIED PEN CORE MODULE AND THE PREPARATION METHOD THEREOF**
VEREINFACHTES STIFTKERNMODUL UND VERFAHREN ZU DESSEN HERSTELLUNG
MODULE DE NOYAU DE STYLO SIMPLIFIÉ ET SON PROCÉDÉ DE PRÉPARATION

(43) Date of publication of application: 02.11.2022
(73) Proprietor: YingKeSong BiYe Research and Development Center Shenzhen Co., Ltd, Shenzhen, Guangdong 518133 (CN)
(72) Inventor: Liu, Hao, Gaoguan, 517100 (CN)
(74) Representative: JD&P Patent Attorneys Joanna Dargiewicz & Partners

(56) References cited:
- WO-A1-2019/245283

## Description

### Technical field

This invention relates to the technical field of electronic capacitance pen, especially a simplified pen core module and the preparation method thereof.

### Background art

As the mainstream input technology for touch panel, capacitive touch has been widely applied to any equipment that uses a touch screen such as mobile communication device and tablet computer. At present, the touch screen is available with either finger or capacitance pen for input operation. However, the core structure of existing special-purpose capacitance pen in the market is excessively complex, thus resulting in low production efficiency and high manufacturing cost; meanwhile, in existing technologies, the core structure typically entails the bonding and coordination of more than one component, and is likely to produce a variety of defects in industrial production, thus causing enormous waste of manpower and materials and making it unsuitable for mass production.

Existing technology CN210402293U disclose a simplified active capacitance pen module, which is characterised in that the pen core components (including receiving head, pen core cylinder, pen core holder, wire and spring) are wrapped with such structures as conical pen head, threaded part, plastic sleeve and pen head cap, and connected with a circuit board, making the resultant core structure extremely difficult to assembly with especially low yield rate;

Besides, existing technology KR1020160022369A discloses an electronic pen, which is characterised in that the pen core is installed in object 210 through circuit carrier 208, and writing pad 203 is connected with piezoelectric generator 204 under the support of piezoelectric engine 205 and digital control device 217, making the pen structure quite complex.

WO2019245283A1 discloses a pen core module comprising a main body having a printed circuit board PCB and annular components sleeved around the printed circuit board PCB, the printed circuit board PCB being provided with three circuit layers, namely a primary emitting circuit, a secondary emitting circuit and a grounding circuit, the back end of the printed circuit board PCB being connected with pins which are electrically connected with the aforesaid three circuits on the printed circuit board PCB.

This invention discloses a capacitance pen, which is characterised by an integral pen core. The pen core is welded with a PCB board through annular components, thanks to which is can achieve all the pen core functions enabled by existing technologies with a greatly simplified structure, thus satisfying the needs of users for delicate and multifunctional writing or painting and other input operations on touch panel, while reducing the failure rate of capacitance pen and the cost of industrial assembly thereof.

### Summary of the invention

This invention aims to provide a simplified pen core module targeting the defects and deficiencies in existing technologies. The pen core module adopts PCB board as the main body of pen core in lieu of a large quantity of complex structural components. It also adopts the inner hole welding technology, which can greatly simplify procedures and reduce processing time and reject rate, while ensuring smooth, clean and intact appearance.

In order to achieve the purpose mentioned above, this invention, as specified in the independent claim 1, provides the following technical proposal:
A capacitance pen core module comprising a main body having a printed circuit board PCB and annular components sleeved around the printed circuit board PCB, the printed circuit board PCB being provided with three circuit layers, namely a primary emitting circuit, a secondary emitting circuit and a grounding circuit, the back end of the printed circuit board PCB being connected with pins which are electrically connected with the aforesaid three circuits on the printed circuit board PCB, characterised in that the pins are composed of flexible printed circuit FPC boards, the printed circuit board PCB being covered with flexible printed circuit FPC boards that serve as pins, the three layers of circuits being electrically connected with the respective flexible printed circuit FPC boards which conduct to the respective pins. Preferably the annular components include a hollow cone part, a hollow metal cylinder and a hollow threaded seat, which are sequentially sleeved around the printed circuit board PCB, with a heat resisting insulation ring being arranged between every two of them all such insulation rings are sleeved around the printed circuit board PCB. Preferably the printed circuit board PCB has a sleeving part, which is sleeves inside the annular components and insulation rings, the back end of the sleeving part of the printed circuit board PCB being connected with a step part which forms a stop with the hollow threaded seat, an extension part being provided behind the step part, the extension part being composed of flexible printed circuit FPC boards.

Preferably the printed circuit board PCB is provided with more than one bonding pad, which are respectively welded and electrically connected with the hollow interior of the cone part, metal cylinder and threaded seat; the metal cylinder being electrically connected with the secondary emitting circuit, and the threaded seat and the cone part are electrically connected with the grounding circuit.

Preferably the end face of the sleeving part of the printed circuit board PCB disposed remote from the step part is provided with a primary emitting end face, the primary emitting end face being electrically connected with the primary emitting circuit.

An assembly method for the pen core module in which bonding pads on the printed circuit board PCB are all coated with solder paste, the annular components namely a hollow cone part, a metal cylinder and a threaded seat and insulation rings installed therebetween are sleeved around the printed circuit board PCB in sequence, the annular components are then filled with solder paste upon the completion of assembly thereof, followed by the heating of the pen core module by virtue of the heating component thereof, which melts the solder paste and consequently achieves an electric connection between the interior surfaces of the annular components with the bonding pads of the printed circuit board PCB, and then the molten solder paste changes into solid tin when cooling down, fixing the hollow annular components to the printed circuit board PCB, thus completing the assembly of the pen core module, the circuits of the pen core module then being tested by virtue of a testing component thereof to ensure the qualification of assembly.

In conclusion, compared with existing technologies, this invention has the following beneficial effects:
(1) This invention is reasonable in design. It adopts PCB board as the main body of pen core and, through optimising the structure of the PCB board adopted, enable it to be sleeved together with several hollow annular components, and be further connected with the primary emitting circuit, secondary emitting circuit and grounding circuit through such annular components, thus simplifying pen core structure by directly replacing a large quantity of complex structural components;
(2) The PCB board adopts a three-layer circuit structure. The design of multiple circuit layers can improve the strength of the PCB board as the main body of pen core, and the combination of this design mode and the layout of bonding pads can further increase the welding stability and strength between the PCB board and the hollow components, and avoid capacitance pen failures resulting from the collision or dropping thereof in the process of use; in addition, the inner hole welding technology is adopted in the process of assembly, which can greatly reduce manpower and material consumption, while ensuring a smooth, clean and intact appearance of pen core.
(3) FPC boards are set behind the PCB boards that serve as pins. The PCB board can be connected with the main control panel of capacitance pen through FPC, thus improving the performance of electrical connection thereof. To be specific, FPC can provide flexible connection, which can avoid failures due to the disconnection of electrical connection points under impact arising from the drop of capacitance pen, etc., thus further improving the crash resistance of capacitance pen;
(4) Upon the completion of assembly of the improved pen core module, the PCB board, main body of pen core, will be completely wrapped by the aforesaid annular components, which can prevent the circuits on the PCB board from being scratched, collided or otherwise damaged, thus further improving the stability of pen core components.

### Drawings explanation

In order to more clearly illustrate the embodiments regarding this invention or technical proposals involved in existing technologies, a brief introduction of the drawings required in the embodiments or the description of existing technologies will be given below. It is obvious that the drawings described below are only limited to embodiments regarding this utility model, based on which ordinary technicians concerned may also obtain other drawings without making any creative effort.
- Fig. 1: refers to the structure diagram of embodiments regarding this invention.
- Fig. 2: refers to the circuit diagram of such embodiments.
- Fig. 3: refers to the circuit bonding pad diagram of such embodiments.

Drawing markers: 1 - PCB + FPC boards, 2 - cone part, 3- insulation ring, 4 - metal cylinder, 5 - threaded seat, A1 - secondary emitting bonding pad, A2 - secondary emitting pin, B1 - primary emitting end face, B2 - primary emitting pin, C1 - cone part grounding bonding pad, C2 - threaded part grounding bonding pad, C3 - grounding pin.

### Specific implementation modes

The technical proposal involved in this invention is further explained as follows in combination with relevant drawings and embodiments.

### Embodiment 1

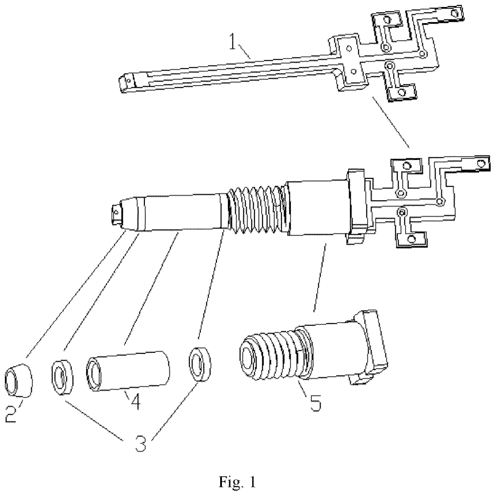

Figures 1-3 show a simplified pen core module, which is characterised in that a PCB board and the annular components sleeved at the PCB board constitute the main body of pen core; the PCB board is composed of sleeving part and step part, with annular components being sleeved at the sleeving part; the annular components include a hollow cone part (2), a hollow metal cylinder (4) and a hollow threaded seat (5); the step part forms a stop with the hollow threaded seat (5); the sleeving part is strip-shaped; the hollow cone part (2), metal cylinder (4) and threaded seat (5) are sleeved at the PCB board in sequence, with a heat resisting insulation ring (3) being arranged between every two of them (all such insulation rings are sleeved at the PCB board); an extension part is provided behind the step part, which is composed of EPC boards.

The PCB board (1) is also covered with FPC boards that server as pins. The PCB board (1) is provided with three layers of circuits, namely grounding circuit (C), primary emitting circuit (B) and secondary emitting circuit (A), which are all electrically connected with the FPC boards and conducting to the pins corresponding to them; a primary emitting end face (B1) is arranged at the end face of the strip part of the PCB board (1);

The PCB board is divided into three layers, namely the front layer (first layer), interlayer and back layer (third layer); a cone part grounding bonding pad (C1) is provided at a certain distance from the sleeving part on the front layer (first layer), and a threaded part grounding bonding pad (C2) is provided at the step part, which are in the same plane; a secondary emitting grounding pad (A1) and a threaded part grounding bonding pad (C2) are provided at the back layer (third layer); a secondary emitting grounding pad (A1) is provided at the middle position between a cone part grounding bonding pad (C1) and a threaded part grounding bonding pad (C2);

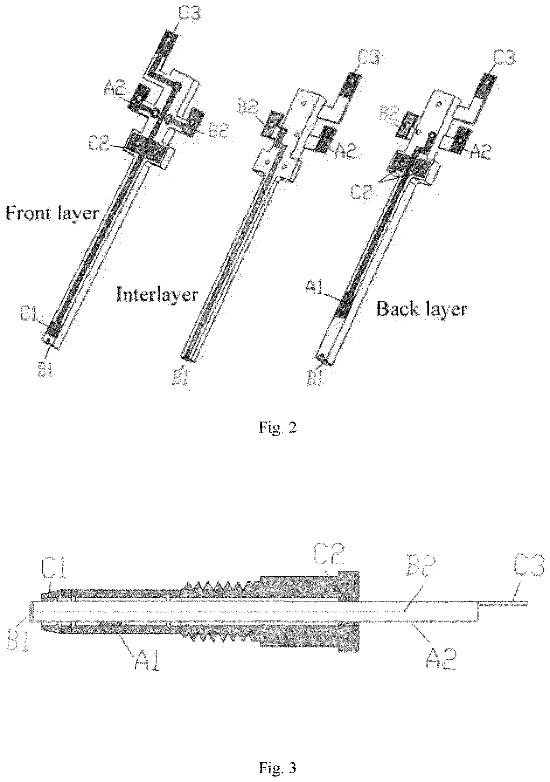

Fig. 2 shows that the grounding circuit (C) is composed of a cone part grounding bonding pad (C1), a threaded part grounding bonding pad (C2), a grounding pin (C3) and a conducting wire connecting them; the primary emitting circuit (B) is composed of a primary emitting end face (B1), a primary emitting pin (B2) and a conducting wire connecting them; the secondary emitting circuit (A) is composed of a secondary emitting end face (A1), a secondary emitting pin (A2) and a conducting wire connecting them; the three circuits are provided at different layers of the PCB board; the B1, B2, C2, C3 and A2 pins or end faces at different layers are corresponding to and overlapped with each other to facilitate connection;

A hollow threaded seat (5) is sleeved at the strip part of the PCB board (1), and is electrically connected with and fixed at the root step of the strip part; the hollow threaded seat (5) is also electrically connected with the grounding circuit (C);

A hollow metal cylinder (4) and a hollow cone part (2) are sleeved in sequence at the relative position of the strip part of the PCB board (1) and, through the hollow interior thereof, electrically connected with the bonding pad of the PCB board (1) and fixed at the relative position; the metal cylinder (4) is electrically connected with the secondary emitting circuit (A), and the cone part (2) is electrically connected with the grounding circuit (C).

A heat resisting insulation ring (3) is sleeved between every two of the threaded seat (5), metal cylinder (4) and cone part (2). The insulation rings are used to inhibit the mutual electrical effects between the three components to improve the writing accuracy of capacitance pen, and they are also used to determine the insulation and spacing distance of the aforesaid components, and fill in the gaps therebetween, thus beautifying the appearance of capacitance pen.

The end face of the PCB board's sleeving part far away from the step part is provided with a primary emitting end face (B1), which is electrically connected with the primary emitting circuit.

Fig. 2 shows that the three pins, A2/B2/C3, are composed of FPC boards, and electrically connected with the main panel of capacitance pen;

An assembly method for pen core module, which is characterised in that a PCB board and the annular components sleeved at the PCB board constitute the main body of pen core; the PCB board is provided with three layers of circuits, namely primary emitting circuit, secondary emitting circuit and grounding circuit; the PCB board is covered with FPC boards that serve as pins, and the aforesaid three circuits are all electrically connected with the FRC boards and conducting to the pins corresponding to them; the bonding pads on the PCB board are all coated with solder paste; the annular components (namely the hollow cone part, metal cylinder and threaded seat) and the insulation rings installed therebetween are sleeved at the PCB board in sequence; the annular components are then filled with solder paste upon the completion of assembly thereof, followed by the heating of the pen core module by virtue of the heating component thereof, which melts the solder paste and consequently achieves the electric connection between the interior surfaces of the annular components with the bonding pads of the PCB board, and then the molten solder paste changes into solid tin when cooling down, making the hollow annular components fixed with the PCB board, thus completing the assembly of the pen core module; finally, the circuits of the pen core module are tested by virtue of the testing component thereof to ensure the qualification of assembly.

The finished pen core module is installed in the capacitance pen kit, with the primary emitting end face (B1) thereof being electrically connected with the tip component of capacitance pen; the external thread of the hollow threaded seat (5) is connected with the internal thread of the capacitance pen kit, with the back end thereof being connected with the main control panel of capacitance pen.

### Embodiment 2

A simplified pen core module, which is characterised in that a PCB board and the annular components sleeved at the PCB board constitute the main body of pen core; the PCB board is composed of sleeving part and step part, with annular components being sleeved at the sleeving part; the annular components include a hollow cone part (2), a hollow metal cylinder (4) and a hollow threaded seat (5); the step part forms a stop with the hollow threaded seat (5); the sleeving part is strip-shaped; the hollow cone part (2), metal cylinder (4) and threaded seat (5) are sleeved at the PCB board in sequence, with a heat resisting insulation ring (3) being arranged between every two of them (all such insulation rings are sleeved at the PCB board); there are pins connected with the back end of the PCB board and electrically connected with the emitting and grounding circuits on the PCB board. In this embodiment, hard connection is adopted for the aforesaid connection with the back end of the PCB board; PCB board adopts metal wires such as copper wire and steel wire as pins; the metal wires adopted are electrically connected with the main control panel of capacitance pen to complete the assembly thereof;

The technical proposal adopting FPC boards as pins, although showing different performances in practice, is still a better choice than the technical proposal adopting metal wire for electrical connection, as the latter is featured by relatively firm but excessively rigid connection, which may bring about relatively hard hand feel in writing, and possibly result in the fracture or breaking of welding spots under external impact; besides, numerous manual welding spots can somehow increase operation difficulty in the process of processing and welding.

The technical proposal adopting FPC boards (flexible conducting wires) as pins can resolve the problem of rigid connection points, but accordingly entails more internal space to accommodate flexible conducting wires, and thus improve the impact resistance of capacitance pen.

In conclusion, this invention is reasonable in design. It adopts PCB board as the main body of pen core in lieu of a large quantity of complex structural components. It also adopts the inner hole welding technology, which can greatly reduce manpower and material consumption as well as reject rate, while ensuring smooth, clean and intact appearance.

The aforesaid welding technology can ensure the reliability and stability of electrical connection without leaving any welding trace on the outer surface, thus avoiding interfering with the combination of other parts due to external protrusion of welding spots, while ensuring the integrity and aesthetics of appearance.

The technical principles of this invention described above in combination with specific embodiments are only limited to the preferential implementation modes of this invention. However, the protection scope of this invention is by no means limited to the embodiments above, instead, it shall be defined only by the scope of the claims.

## Claims

1. A capacitance pen core module comprising a main body having a printed circuit board, PCB, (1) and annular components (2,4,5) sleeved around the PCB (1), the PCB (1) being provided with three circuit layers, namely a primary emitting circuit (B), a secondary emitting circuit (A) and a grounding circuit (C), the back end of the PCB (1) being connected with pins (B1,B2,C2,C3,A2) which are electrically connected with the aforesaid three circuits on the printed circuit board PCB (1), **characterised in that** the pins (B1,B2,C2,C3,A2) are composed of flexible printed circuit, FPC, boards, the PCB (1) being covered with FPC boards that serve as pins (B1,B2,C2,C3,A2), the three layers of circuits (A,B,C) being electrically connected with the respective FPC boards which conduct to the respective pins (B1,B2,C2,C3,A2).

2. The pen core module of claim 1, **characterised in that** the annular components (2,4,5) include a hollow cone part (2), a hollow metal cylinder (4) and a hollow threaded seat (5), which are sequentially sleeved around the PCB (1), with a heat resisting insulation ring (3) being arranged between every two of them, all such insulation rings (3) being sleeved around the PCB (1).

3. The pen core module of claim 2, **characterised in that** the PCB (1) has a sleeving part, which is sleeved inside the annular components (2,4,5) and insulation rings (3), the back end of the sleeving part of the PCB (1) being connected with a step part which forms a stop with the hollow threaded seat, an extension part being provided behind the step part, the extension part being composed of FPC boards.

4. The pen core module of claim 1, **characterised in that** the PCB (1) is provided with more than one bonding pad, which are respectively welded and electrically connected with the hollow interior of a cone part (2), metal cylinder (4) and threaded seat (5), the metal cylinder (4) being electrically connected with the secondary emitting circuit (A), and the threaded seat (5) and the cone part (2) are electrically connected with the grounding circuit (C).

5. The pen core module of claim 3, **characterised in that** the end face of the sleeving part of the PCB (1) disposed remote from the step part is provided with a primary emitting end face, the primary emitting end face being electrically connected with the primary emitting circuit.

6. An assembly method for the pen core module of claim 1, **characterised in that** bonding pads on the PCB (1) are all coated with solder paste the annular components (2,4,5) namely a hollow cone part, a metal cylinder and a threaded seat and insulation rings (3) installed therebetween are sleeved around the PCB (1) in sequence, the annular components (2,4,5) are then filled with solder paste upon the completion of assembly thereof, followed by the heating of the pen core module by virtue of the heating component thereof, which melts the solder paste and consequently achieves an electric connection between the interior surfaces of the annular components (2,4,5) with the bonding pads of the PCB (1), and then the molten solder paste changes into solid tin when cooling down, fixing the hollow annular components (2,4,5) to the PCB (1), thus completing the assembly of the pen core module, the circuits of the pen core module then being tested by virtue of a testing component thereof to ensure the qualification of assembly.

## Patentansprüche

1. Kapazitives Stiftkemmodul, umfassend einen Hauptkörper, der eine gedruckte Leiterplatte, PCB, (1) und ringförmige Komponenten (2, 4, 5) aufweist, die um die PCB (1) herum ummantelt sind, wobei die PCB (1) mit drei Schichten von Schaltungen versehen ist, nämlich einer primären Emissionsschaltung (B), einer sekundären Emissionsschaltung (A) und einer Erdungsschaltung (C), wobei das hintere Ende der PCB (1) mit Stiften (B1, B2, C2, C3, A2) verbunden ist, die elektrisch mit den vorgenannten drei Schaltungen auf der Leiterplatte PCB (1) verbunden sind, **dadurch gekennzeichnet, dass** die Stifte (B1, B2, C2, C3, A2) aus flexiblen gedruckten Schaltungen, FPC-Platten, bestehen, wobei die PCB (1) mit FPC-Platten bedeckt ist, die als Stifte (B1, B2, C2, C3, A2) dienen, wobei die drei Schichten von Schaltungen (A, B, C) elektrisch mit den jeweiligen FPC-Platten verbunden sind, die zu den jeweiligen Stiften (B1, B2, C2, C3, A2) führen.

2. Stiftkernmodul nach Anspruch 1, **dadurch gekennzeichnet, dass** die ringförmigen Komponenten (2, 4, 5) einen hohlen Konusteil (2), einen hohlen Metallzylinder (4) und einen hohlen Gewindesitz (5) umfassen, die nacheinander um die PCB (1) herum ummantelt sind, wobei zwischen jeweils zwei von ihnen ein wärmebeständiger Isolationsring (3) angeordnet ist, wobei alle diese Isolationsringe (3) um die PCB (1) herum ummantelt sind.

3. Stiftkemmodul nach Anspruch 2, **dadurch gekennzeichnet, dass** die PCB (1) einen Umhüllungsteil aufweist, der innerhalb der ringförmigen Komponenten (2, 4, 5) und Isolationsringe (3) umhüllt ist, wobei das hintere Ende des Umhüllungsteils der PCB (1) mit einem Stufenteil verbunden ist, der einen Anschlag mit dem hohlen Gewindesitz bildet, wobei ein Verlängerungsteil hinter dem Stufenteil vorgesehen ist, wobei das Verlängerungsteil aus FPC-Platten besteht.

4. Stiftkernmodul nach Anspruch 1, **dadurch gekennzeichnet, dass** die PCB (1) mit mehr als einem Bondpad versehen ist, die jeweils mit dem hohlen Inneren eines Konusteils (2), eines Metallzylinders (4) und eines Gewindesitzes (5) verschweißt und elektrisch verbunden sind, wobei der Metallzylinder (4) elektrisch mit der sekundären Emissionsschaltung (A) verbunden ist und der Gewindesitz (5) und der Konusteil (2) elektrisch mit der Erdungsschaltung (C) verbunden sind.

5. Stiftkernmodul nach Anspruch 3, **dadurch gekennzeichnet, dass** die Endfläche des Umhüllungsteils der PCB (1), die entfernt von dem Stufenteil angeordnet ist, mit einer primär emittierenden Endfläche versehen ist, wobei die primär emittierende Endfläche elektrisch mit der primären Emissionsschaltung verbunden ist.

6. Montageverfahren für das Stiftkernmodul nach Anspruch 1, **dadurch gekennzeichnet, dass** die Kontaktflächen auf der PCB (1) alle mit Lötpaste beschichtet werden, wobei die ringförmige Komponenten (2, 4, 5), nämlich ein Hohles Konusteil, ein Metallzylinder und ein Gewindesitz sowie dazwischen angeordnete Isolationsringe (3), nacheinander um die PCB (1) herum ummantelt werden, die ringförmigen Komponenten (2, 4, 5) dann nach Abschluss ihrer Montage mit Lötpaste gefüllt werden, gefolgt von der Erwärmung des Stiftkernmoduls durch dessen Heizkomponente, wodurch die Lötpaste schmilzt und folglich eine elektrische Verbindung zwischen den Innenflächen der ringförmigen Komponenten (2, 4, 5) mit den Kontaktflächen der PCB (1) herstellt, und dann die geschmolzene Lötpaste beim Abkühlen in festes Zinn übergeht, wodurch die hohlen ringförmigen Komponenten (2, 4, 5) an der PCB (1) fixiert werden, wodurch die Montage des Stiftkemmoduls abgeschlossen wird, wobei die Schaltungen des Stiftkernmoduls dann mittels einer Testkomponente davon getestet werden, um die Qualifikation der Montage sicherzustellen.

## Revendications

1. Module d'âme de stylo à condensateur comprenant un corps principal comportant une carte de circuit imprimé, PCB, (1) et des composants annulaires (2, 4, 5) gainés autour de la PCB (1), la PCB (1) étant pourvue de trois couches de circuit, à savoir un circuit d'émission primaire (B), un circuit d'émission secondaire (A) et un circuit de mise à la terre (C), l'extrémité arrière de la PCB (1) étant connectée à des broches (B1, B2, C2, C3, A2) qui sont connectées électriquement aux trois circuits susmentionnés sur la PCB (1), **caractérisé en ce que** les broches (B1, B2, C2, C3, A2) sont composées des cartes de circuit imprimé flexible, FPC, la PCB (1) étant recouvert des cartes FPC qui servent de broches (B1, B2, C2, C3, A2), les trois couches de circuits (A, B, C) étant connectées électriquement aux cartes FPC respectives qui conduisent aux broches respectives (B1, B2, C2, C3, A2).

2. Module d'âme de stylo selon la revendication 1, **caractérisé en ce que** les composants annulaires (2, 4, 5) comprennent une partie conique creuse (2), un cylindre métallique creux (4) et un siège fileté creux (5), qui sont gainés en séquence autour de la PCB (1), une bague isolante (3) résistante à la chaleur étant disposée entre chaque deux d'entre eux, toutes les bagues isolantes (3) étant gainées autour de la PCB (1).

3. Module d'âme de stylo selon la revendication 2, **caractérisé en ce que** la PCB (1) comporte une partie de gaine qui est gainée à l'intérieur des composants annulaires (2, 4, 5) et des bagues isolantes (3), l'extrémité arrière de la partie de gaine de la PCB (1) étant connectée à une partie à gradins qui forme une butée avec le siège fileté creux, une partie d'extension étant prévue derrière la partie à gradins, et la partie d'extension étant composée des cartes FPC.

4. Module d'âme de stylo selon la revendication 1, **caractérisé en ce que** la PCB (1) est pourvue de plusieurs pastilles de soudage, qui sont respectivement soudés et connectés électriquement à l'intérieur creuse de la partie conique (2), du cylindre métallique (4) et du siège fileté (5), le cylindre métallique (4) étant connecté électriquement au circuit d'émission secondaire (A) et au siège fileté (5), et la partie conique (2) sont connectés électriquement au circuit de mise à la terre (C).

5. Module d'âme de stylo selon la revendication 3, **caractérisé en ce que** la face d'extrémité de la partie de gaine de la PCB (1) disposée à distance de la partie à gradins est pourvue d'une face d'extrémité d'émission primaire, la face d'extrémité d'émission primaire étant connectée électriquement au circuit d'émission primaire.

6. Procédé d'assemblage du module d'âme de stylo selon la revendication 1, **caractérisé en ce que** les pastilles de soudage sur la PCB (1) sont toutes recouvertes de pâte à souder, les composants annulaires (2, 4, 5) à savoir une partie conique creuse, un cylindre métallique et un siège fileté et des bagues isolantes (3) installées entre ceux-ci sont gainés autour de la PCB (1) en séquence, ensuite les composants annulaires (2, 4, 5) sont remplis de pâte à souder à la fin de l'assemblage de ceux-ci, suivis du chauffage du module d'âme de stylo en vertu du composant chauffant de celui-ci, afin de faire fondre la pâte à souder et de réaliser par conséquent une connexion électrique entre les surfaces intérieures des composants annulaires (2, 4, 5) avec les pastilles de liaison de la PCB (1), puis la pâte à souder fondue se transforme en étain solide au cours du refroidissement, les composants annulaires creux (2, 4, 5) sont fixés sur la PCB (1), complétant ainsi l'assemblage du module d'âme de stylo, les circuits du module d'âme de stylo sont ensuite testés en vertu sur un composant de test de celui-ci pour assurer la qualification de l'assemblage.
